# EUROPÄISCHE PATENTANMELDUNG

(11) **EP 2 439 219 A1**
(43) Veröffentlichungstag der Anmeldung: **11.04.2012**
(21) Anmeldenummer: 10186742.2
(22) Anmeldetag: 06.10.2010
(51) Int. Cl.: C08G 18/10, C08G 18/12, C08G 18/38, C08L 75/04, C08G 77/02, C08K 9/04

(54) **Verringerung des Anteils an Isocyanatgruppen aufweisenden Monomeren in feuchtigkeitshärtenden Polyurethanzusammensetzungen**

(71) Anmelder: Sika Technology AG, 6340 Baar (CH)
(72) Erfinder: Hossain, Laila, 8047, Zürich (CH); Veghini, Dario, 5610, Wohlen (CH)
(74) Vertreter: Sika Patent Attorneys

(57) **Zusammenfassung**

Gegenstand der vorliegenden Erfindung ist eine Zusammensetzung umfassend mindestens ein Isocyanatgruppen aufweisendes Polyurethanpolymer, mindestens ein Isocyanatgruppen aufweisendes Monomer sowie mindestens ein Siliciumdioxid, welches an seiner Oberfläche funktionelle Gruppen aufweist, die gegenüber Isocyanatgruppen reaktiv sind.

Dabei liegt das Siliciumdioxid in Form von Partikeln vor, welche eine durchschnittliche Partikelgrösse von ≤ 100 µm und eine spezifische Oberfläche von ≥ 100 m²/g aufweisen. Weiterhin sind die funktionellen Gruppen des Siliciumdioxids zumindest teilweise mit Isocyanatgruppen des Isocyanatgruppen aufweisenden Monomers umgesetzt.

## Beschreibung

### Technisches Gebiet

Die Erfindung liegt auf dem Gebiet der feuchtigkeitshärtenden Polyurethanzusammensetzungen, welche insbesondere als elastische Klebstoffe, Dichtstoffe und Beschichtungen eingesetzt werden.

### Stand der Technik

Zusammensetzungen, welche auf Isocyanatgruppen aufweisenden Polyurethanpolymeren basieren, werden seit geraumer Zeit als elastische Klebstoffe, Dichtstoffe und Beschichtungen eingesetzt.

Die Herstellung der Isocyanatgruppen aufweisenden Polyurethanpolymere erfolgt dabei typischerweise durch Reaktion von Polyolen mit einem Überschuss an Polyisocyanaten. Durch die Herstellung bedingt, weist das Isocyanatgruppen aufweisende Polyurethanpolymer einen Restanteil an Polyisocyanaten, also an Isocyanatgruppen aufweisenden Monomeren, auf.

Die hergestellten Isocyanatgruppen aufweisenden Polyurethanpolymere werden üblicherweise ohne weitere Aufarbeitung in feuchtigkeitshärtende Polyurethanzusammensetzungen eingesetzt, wobei auch der Restanteil an Isocyanatgruppen aufweisenden Monomeren in der Zusammensetzung verbleibt.

Obwohl sich Isocyanatgruppen aufweisende Monomere bis zu einem gewissen Anteil vorteilhaft auf die Zusammensetzung auswirken können, ist es in zahlreichen Anwendungen erwünscht oder erforderlich, den Anteil an Isocyanatgruppen aufweisenden Monomeren in feuchtigkeitshärtenden Polyurethanzusammensetzungen zu verringern.

Zur Verringerung des Monomergehalts sind unterschiedliche Ansätze bekannt.

WO 03/046040 A1 beschreibt beispielsweise die Verringerung des Anteils an Isocyanatgruppen aufweisenden Monomeren durch Destillation des bei der Herstellung der Isocyanatgruppen aufweisenden Polyurethanpolymere erhaltenen Reaktionsprodukts, wobei die bei der Herstellung eingesetzten Ausgangsstoffe abdestilliert werden. Bekanntermassen ist die Destillation von Polymerzusammensetzungen aufwendig und teuer. Weiterhin ist die Einstellung eines gegebenenfalls gewünschten Monomergehalts bei dessen Verringerung schwierig.

Ein weitere Möglichkeit zur Verringerung des Monomergehalts ist beispielsweise beschreiben in EP 0 951 493 A1 und betrifft die Umsetzung eines Polyols mit mindestens zwei verschiedenen Diisocyanaten unterschiedlicher Reaktivität, wobei eines der Diisocyanate ein unsymmetrisches Diisocyanat ist. Dieser Ansatz ist in der Umsetzung sehr aufwendig und weist zudem den Nachteil auf, dass unsymmetrische Isocyanate häufig teuer sind. Weiterhin ist die Ausgestaltung des Isocyanatgruppen aufweisenden Polyurethans durch die limitierte Auswahl an unsymmetrischen Isocyanaten begrenzt.

### Darstellung der Erfindung

Aufgabe der vorliegenden Erfindung ist es daher, eine Zusammensetzung umfassend mindestens ein Isocyanatgruppen aufweisendes Polyurethanpolymer bereitzustellen, welche einen geringeren Anteil an Isocyanatgruppen aufweisenden Monomeren aufweist.

Erfindungsgemäss wird diese Aufgabe durch eine Zusammensetzung gemäss Anspruch 1 gelöst.

Überraschenderweise wurde gefunden, dass der Einsatz eines Siliciumdioxids, welches an seiner Oberfläche funktionelle Gruppen aufweist, die gegenüber Isocyanatgruppen reaktiv sind, eine Verringerung des Anteils an Isocyanatgruppen aufweisenden Monomeren in Zusammensetzungen enthaltend mindestens ein Isocyanatgruppen aufweisendes Polyurethanpolymer herbeiführt, ohne die Zusammensetzung dabei zu beeinträchtigen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine Zusammensetzung umfassend
- mindestens ein Isocyanatgruppen aufweisendes Polyurethanpolymer;
- mindestens ein Isocyanatgruppen aufweisendes Monomer;
   sowie
- mindestens ein Siliciumdioxid, welches an seiner Oberfläche funktionelle Gruppen aufweist, die gegenüber Isocyanatgruppen reaktiv sind.

Dabei liegt das Siliciumdioxid in Form von Partikeln vor, welche eine durchschnittliche Partikelgrösse von ≤ 100 µm und eine spezifische Oberfläche von ≥ 100 m²/g aufweisen.

Weiterhin sind die funktionellen Gruppen des Siliciumdioxids zumindest teilweise mit Isocyanatgruppen des Isocyanatgruppen aufweisenden Monomers umgesetzt.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt. "Tetraalkoxysilane" stellen folglich gemäss dieser Definition keine Organosilane dar.

Als "Aminosilane" bzw. "Mercaptosilane" werden Organosilane bezeichnet, deren organischer Rest eine Aminogruppe bzw. eine Mercaptogruppe aufweist.

Unter "Molekulargewicht" versteht man im vorliegenden Dokument das Molekulargewichtsmittel Mₙ (Zahlenmittel).

Unter "Raumtemperatur" wird eine Temperatur von 23°C verstanden.

Das in der Zusammensetzung enthaltene, Isocyanatgruppen aufweisende Polyurethanpolymer ist typischerweise erhältlich aus der Umsetzung von mindestens einem Polyol mit mindestens einem Polyisocyanat, so wie sie dem Fachmann bestens bekannt ist.

Geeignete Polyole sind insbesondere Polyetherpolyole, Polyesterpolyole und Polycarbonatpolyole sowie Mischungen dieser Polyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Geeignete Polyole weisen bevorzugt ein mittleres Molekulargewicht von 250 bis 30'000 g/mol, insbesondere von 400 bis 8000 g/mol, und eine mittlere OH-Funktionalität im Bereich von 1.6 bis 3 auf.

Geeignete Polyole sind beispielsweise unter dem Handelsnamen Acclaim^{®} 4200 N kommerziell erhältlich von Bayer MaterialScience AG, Deutschland.

Geeignete Polyisocyanate sind handelsübliche aliphatische, cycloaliphatische oder aromatische Polyisocyanate. Besonders geeignet sind Diisocyanate wie 1,6-Hexamethylendiisocyanat (HDI), 2,2,4- und 2,4,4-Trimethyl-1,6-hexamethylendiisocyanat (TMDI), 1-Isocyanato-3,3,5-trimethyl-5-isocyanatomethyl-cyclohexan (= Isophorondiisocyanat oder IPDI), 2,4- und 2,6-Toluylendiisocyanat (TDI), 4,4'-, 2,4'- und 2,2'-Diphenylmethandiisocyanat (MDI). Besonders geeignet sind dabei technische Mischungen von MDI mit einem hohen Gehalt an 4,4'-MDI.

Geeignete Polyole und Polyisocyanate sind beispielsweise solche, wie sie zur Herstellung des Polyurethanpolymers PUP beschrieben sind in der Patentanmeldung WO 2010/049516 A1, deren Offenbarung hiermit durch Bezugnahme eingeschlossen ist.

Bevorzugte Zusammensetzungen können auch mehrere unterschiedliche Isocyanatgruppen aufweisende Polyurethanpolymere umfassen, welche unter Verwendung unterschiedlicher Polyisocyanate hergestellt wurden. Beispielsweise umfasst die Zusammensetzung mindestens ein Isocyanatgruppen aufweisendes Polyurethanpolymer aus einem polymeren Diol und MDI als Diisocyanat und ein Isocyanatgruppen aufweisendes Polyurethanpolymer aus einem polymeren Diol und TDI als Diisocyanat.

Vorzugsweise weisen die in der erfindungsgemässen Zusammensetzung enthaltenen Isocyanatgruppen aufweisenden Polyurethanpolymere ein mittleres Molekulargewicht von 1000 bis 50'000 g/mol, insbesondere von 2000 bis 30'000 g/mol, und eine mittlere NCO-Funktionalität im Bereich von 1.8 bis 3 auf.

Weiterhin enthält die erfindungsgemässe Zusammensetzung mindestens ein Isocyanatgruppen aufweisendes Monomer, wobei dessen Isocyanatgruppen zumindest teilweise mit den funktionellen Gruppen des Siliciumdioxids umgesetzt sind.

Die zumindest teilweise Umsetzung der Isocyanatgruppen des Isocyanatgruppen aufweisenden Monomers mit den funktionellen Gruppen des Siliciumdioxids erfolgt beim Zusammenführen der Zusammensetzung mit dem Siliciumdioxid.

Das in der Zusammensetzung enthaltene mindestens eine Isocyanatgruppen aufweisende Monomer, ist typischerweise ein Diisocyanat und stammt von der Herstellung des Isocyanatgruppen aufweisenden Polyurethanpolymers, wie sie vorhergehen beschrieben worden ist. Demnach handelt es sich beim Isocyanatgruppen aufweisenden Monomer in der Regel um einen Ausgangsstoff der Herstellung des Polyurethanpolymers, der insbesondere anfällt, da zur Herstellung eines Isocyanatgruppen terminierten Polyurethanpolymers, das Diisocyanat gegenüber dem Polyol im stöchiometrischen Überschuss eingesetzt wird.

Handelt es sich bei der Zusammensetzungen um eine solche, die mehrere unterschiedliche Isocyanatgruppen aufweisende Polyurethanpolymere enthält, welche unter Verwendung unterschiedlicher Polyisocyanate hergestellt wurden, so umfasst die Zusammensetzung in der Regel auch unterschiedliche Isocyanatgruppen aufweisende Monomere. Beispielsweise handelt es sich dabei um MDI und TDI, wie es vorhergehend bereits beschrieben worden ist.

Der Anteil an Isocyanatgruppen aufweisendem Monomer, welches in der Zusammensetzung verbleibt, beträgt insbesondere ≤ 1.5 Gew.-%, bevorzugt ≤ 1 Gew.-%, bezogen auf das Gewicht der gesamten Zusammensetzung.

In einer bevorzugten Zusammensetzungen enthaltend mindestens ein Isocyanatgruppen aufweisendes Polyurethanpolymer aus einem polymeren Diol und MDI als Diisocyanat und somit auch einen Restanteil an monomerem MDI, liegt der Anteil an MDI insbesondere bei ≤ 0.1 Gew.-%, bezogen auf das Gewicht der gesamten Zusammensetzung.

Weiterhin umfasst die erfindungsgemässe Zusammensetzung mindestens ein Siliciumdioxid, welches an seiner Oberfläche funktionelle Gruppen aufweist, die gegenüber Isocyanatgruppen reaktiv sind, wobei die funktionellen Gruppen des Siliciumdioxids zumindest teilweise mit Isocyanatgruppen des Isocyanatgruppen aufweisenden Monomers umgesetzt sind.

Das Siliciumdioxid liegt dabei in Form von Partikeln vor, welche eine durchschnittliche Partikelgrösse von ≤ 100 µm aufweisen. Insbesondere beträgt die durchschnittliche Partikelgrösse ≥ 1 µm, bevorzugt liegt sie im Bereich von 50 bis 60 µm. Die Partikel können dabei eine beliebige Form, beispielsweise Kugeln, Späne, Blättchen und dergleichen, aufweisen. Insbesondere sind sie kugelförmig.

Weiterhin weisen die Partikel eine spezifische Oberfläche von ≥ 100 m²/g. Insbesondere weisen die Partikel eine spezifische Oberfläche von ≥ 300 m²/g, bevorzugt im Bereich von 400 bis 800 m²/g auf.

Vorzugsweise liegt das Siliciumdioxid in Form von Partikeln vor, welche porös sind, wobei die Poren eine Grösse im Bereich von 0.4 bis 50 nm aufweisen.

Die spezifische Oberfläche wird dabei mittels Stickstoffadsorption mit einem Gasadsorptionsgerät der Firma Beckman Coulter, Inc., USA, nach BET-Methode (EN ISO 18757), gemessen. Die Porengrössenverteilung kann an der Adsorptionskurve, welche aus der Messung der spezifischen Oberfläche hervorgeht, berechnet werden.

Poröse Partikel mit einer grossen spezifischen Oberfläche weisen einerseits den Vorteil auf, dass sie eine grosse Anzahl an funktionellen Gruppen pro Partikel aufweisen können. Andererseits weisen sie den Vorteil auf, dass ihre funktionellen Gruppen selektiv mit den Isocyanatgruppen des Isocyanatgruppen aufweisenden Monomers reagieren und nur zu einem geringen Teil mit den Isocyanatgruppen des Isocyanatgruppen aufweisenden Polyurethanpolymers. Durch die Porosität sind die funktionellen Gruppen des Siliciumdioxids für das Polyurethanpolymer nämlich nur erschwert zugänglich.

Insbesondere ist das Siliciumdioxid an seiner Oberfläche mit funktionellen Gruppen, welche gegenüber Isocyanatgruppen reaktiv sind, funktionalisiert, d.h., dass die Oberfläche des Siliciumdioxids chemisch modifiziert ist.

Die funktionellen Gruppen, welche gegenüber Isocyanatgruppen reaktiv sind, sind insbesondere Amino-, Mercapto-, Carboxyl-, oder Thioharnstoffgruppen, bevorzugt Aminogruppen.

Der Vorteil eines mit Aminogruppen funktionalisierten Siliciumdioxids ist, dass Aminogruppen eine besonders hohe Reaktivität gegenüber Isocyanatgruppen aufweisen.

Im Vergleich zu nicht funktionalisiertem Siliciumdioxid, welches an seiner Oberfläche häufig Hydroxylgruppen aufweist, die ebenfalls gegenüber Isocyanatgruppen reaktiv sind, führen funktionalisierte Siliciumdioxide, wie sie vorhergehend beschrieben worden sind, zu einer deutlich effizienteren Verringerung des Anteils an Isocyanatgruppen aufweisenden Monomeren.

Bevorzugt ist das Siliciumdioxid mit einem Organosilan funktionalisiert, dessen organischer Rest mindestens eine funktionelle Gruppe aufweist, welche gegenüber Isocyanatgruppen reaktiv ist. Die Funktionalisierung des Siliciumdioxids ist dem Fachmann bekannt und erfolgt insbesondere durch Zusammenführen von Siliciumdioxid mit dem Organosilan.

Als Organosilane eignen sich insbesondere Aminosilane oder Mercaptosilane. Beispiele für geeignete Organosilane sind 3-Aminopropyltrimethoxysilan, N-Butyl-3-aminopropyltrimethoxysilan, N-Phenyl-3-amino-propyltrimethoxysilan, 3-Mercaptopropyltrimethoxysilan sowie Analoga der genannten Organosilane mit Ethoxy- oder Isopropoxygruppen anstelle der Methoxygruppen am Silicium.

Weiterhin eignen sich als Organosilane auch di- oder triaminofuntionelle Organosilane wie beispielsweise N-(2-Aminoethyl)-3-aminopropyl-trimethoxysilan oder N-(2-Aminoethyl)-N'-[3-(trimethoxysilyl)propyl]ethylendiamin.

Durch die Verwendung eines Siliciumdioxids, wie es vorhergehend beschrieben worden ist, in Zusammensetzungen enthaltend mindestens ein Isocyanatgruppen aufweisendes Polyurethanpolymer, kann der Restanteil an Isocyanatgruppen aufweisenden Monomeren, welcher insbesondere aufgrund der Herstellung des Isocyanatgruppen aufweisenden Polyurethanpolymers in der Zusammensetzung verbleibt, entfernt oder verringert werden.

Der Vorteil des beschriebenen Siliciumdioxids liegt darin, dass seine funktionellen Gruppen sehr selektiv mit den Isocyanatgruppen des Monomers reagieren und dass somit die Isocyanatgruppen des Polyurethanpolymers für die Aushärtung der Zusammensetzung zur Verfügung stehen.

Besonders geeignetes funktionalisiertes Siliciumdioxid ist beispielsweise unter dem Handelsnamen QuadraSil™ AP, MP oder TA kommerziell erhältlich von Johnson Matthey, plc, Grossbritannien.

Der Anteil des Siliciumdioxids, welches an seiner Oberfläche funktionelle Gruppen aufweist, die gegenüber Isocyanatgruppen reaktiv sind, beträgt insbesondere 0.01 bis 10 Gew.-%, insbesondere 0.5 bis 5 Gew.-%, bevorzugt 0.5 bis 3 Gew.-%, bezogen auf das Gesamtgewicht der Zusammensetzung.

Weiterhin kann die erfindungsgemässe Zusammensetzung weitere Bestandteile enthalten, welche in der Polyurethanchemie und insbesondere im Bereich der feuchtigkeitshärtenden Kleb- und Dichtstoffe auf Basis von Polyurethanpolymeren üblich und dem Fachmann bestens bekannt sind.

Typischerweise umfassen solche weiteren Bestandteile Füllstoffe, Katalysatoren, Haftvermittler, Rheologie-Modifizierer, Weichmacher, Reaktivverdünner, Trocknungsmittel und dergleichen.

Insbesondere enthält die erfindungsgemässe Zusammensetzung zusätzlich mindestens einen Füllstoff.

Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte Zusammensetzung.

Weiterhin betrifft die vorliegende Erfindung ein Verfahren zur Verringerung des Anteils an Isocyanatgruppen aufweisenden Monomeren in Zusammensetzungen enthaltend mindestens ein Isocyanatgruppen aufweisendes Polyurethanpolymer sowie mindestens ein Isocyanatgruppen aufweisendes Monomer umfassend die Schritte
- Bereitstellen einer Zusammensetzung enthaltend mindestens ein Isocyanatgruppen aufweisendes Polyurethanpolymer sowie mindestens ein Isocyanatgruppen aufweisendes Monomer;
- Zusammenführen der Zusammensetzung mit einem Siliciumdioxid, welches an seiner Oberfläche funktionelle Gruppen aufweist, die gegenüber Isocyanatgruppen reaktiv sind, wobei das Siliciumdioxid in Form von Partikeln vorliegt, welche eine durchschnittliche Partikelgrösse von ≤ 100 µm und eine spezifische Oberfläche von ≥ 100 m²/g aufweisen.

Dieses erfindungsgemässe Verfahren führt zu einer Verringerung des Anteils an Isocyanatgruppen aufweisenden Monomeren in der Zusammensetzung.

Bevorzugtes Siliciumdioxid, welches an seiner Oberfläche funktionelle Gruppen aufweist, die gegenüber Isocyanatgruppen reaktiv sind, ist bereits vorhergehend beschrieben worden.

In einer ersten Ausführungsform des erfindungsgemässen Verfahrens handelt es sich bei der Zusammensetzung enthaltend mindestens ein Isocyanatgruppen aufweisendes Polyurethanpolymer sowie mindestens ein Isocyanatgruppen aufweisendes Monomer um eine Zusammensetzung, welche direkt und ohne weitere Aufarbeitung aus der Herstellung des Isocyanatgruppen aufweisenden Polyurethanpolymers hervorgeht. Eine derartige Zusammensetzung umfasst typischerweise das Isocyanatgruppen aufweisende Polyurethanpolymer als Reaktionsprodukt, Restanteile der eingesetzten Ausgangsstoffe sowie allfällige weitere, dem Fachmann bekannte Bestandteile, welche für die Herstellung des Polyurethanpolymers benötigt werden.

Das Zusammenführen einer derartigen Zusammensetzung mit dem funktionalisierten Siliciumdioxid erfolgt üblicherweise unter ständigem Rühren und Schutzgasatmosphäre bei Raumtemperatur, gegebenenfalls unter Mitverwendung geeigneter Katalysatoren, beispielsweise zinnorganische Verbindungen, wie sie üblicherweise für Additionsreaktionen von Isocyanaten eingesetzt werden.

Das eingesetzte Siliciumdioxid kann nach der Umsetzung seiner funktionellen Gruppen mit den Isocyanatgruppen aufweisenden Monomeren in der Zusammensetzung für deren weitere Verwendung verbleiben oder es kann, beispielsweise durch Filtration, aus der Zusammensetzung entfernt werden.

Für den Fall, dass das eingesetzte Siliciumdioxid nach der Umsetzung seiner funktionellen Gruppen mit den Isocyanatgruppen aufweisenden Monomeren nicht in der Zusammensetzung verbleiben soll, kann das Zusammenführen der Zusammensetzung enthaltend mindestens ein Isocyanatgruppen aufweisendes Polyurethanpolymer sowie mindestens ein Isocyanatgruppen aufweisendes Monomer mit dem funktionalisierten Siliciumdioxid auch mittels Durchleiten der Zusammensetzung durch eine Schüttung oder Packung eines beschriebenen Siliciumdioxids, typischerweise in einem Fest- oder Wirbelbettreaktor, erfolgen.

In einer zweiten Ausführungsform handelt es sich bei der Zusammensetzung enthaltend mindestens ein Isocyanatgruppen aufweisendes Polyurethanpolymer sowie mindestens ein Isocyanatgruppen aufweisendes Monomer um eine Zusammensetzung, wie sie aus der Herstellung des Isocyanatgruppen aufweisenden Polyurethanpolymers hervorgeht, wobei die Zusammensetzung bereits weitere, für die Verwendung der Zusammensetzung als Klebstoff, Dichtstoff oder als Beschichtung üblicherweise eingesetzte Bestandteile, wie sie vorhergehend erwähnt sind, umfasst.

Bei dieser Ausführungsform des Verfahrens erfolgt das Zusammenführen der Zusammensetzung mit dem funktionalisierten Siliciumdioxid insbesondere in einem Vakuummischer bei Temperaturen im Bereich von 20°C bis 100°C.

Der Vorteil dieser Ausführungsform des Verfahrens liegt darin, dass das Verfahren grundsätzlich auch auf bereits gebrauchsfertige Zusammensetzungen auf Basis von Isocyanatgruppen aufweisenden Polyurethanpolymeren zur Verringerung des Anteils an Isocyanatgruppen aufweisenden Monomeren verwendet werden kann.

Meist bevorzugt wird im erfindungsgemässen Verfahren eine Zusammensetzung, welche direkt und ohne weitere Aufarbeitung aus der Herstellung des Isocyanatgruppen aufweisenden Polyurethanpolymers hervorgeht, bereitgestellt und mit dem funktionalisierten Siliciumdioxid zusammengeführt, so wie es in der ersten Ausführungsform des Verfahrens beschrieben ist.

Der Vorteil dieser Ausführungsform besteht einerseits darin, dass die Verringerung des Monomergehalts sehr effektiv ist. Andererseits weist diese Ausführungsform den Vorteil auf, dass sie sich bei Zusammensetzungen, welche mehrere unterschiedliche Isocyanatgruppen aufweisende Polyurethanpolymere umfassen, selektiv für die Verringerung des Anteils eines bestimmten Monomers einsetzen lässt.

Insbesondere eignet sich das erfindungsgemässe Verfahren zur Verringerung des Anteils an symmetrischen Diisocyanaten wie MDI, typischerweise in Zusammensetzungen enthaltend mindestens ein Isocyanatgruppen aufweisendes Polyurethanpolymer aus einem polymeren Diol und MDI als Diisocyanat.

Weiterhin betrifft die Erfindung eine Zusammensetzung erhalten durch ein Verfahren zur Verringerung des Anteils an Isocyanatgruppen aufweisenden Monomeren in Zusammensetzungen enthaltend mindestens ein Isocyanatgruppen aufweisendes Polyurethanpolymer sowie mindestens ein Isocyanatgruppen aufweisendes Monomer, wie es vorhergehend beschreiben worden ist.

Die vorhergehend beschriebenen Zusammensetzungen werden vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert.

Weiterhin betrifft die vorliegende Erfindung die Verwendung einer vorhergehend beschriebenen Zusammensetzung als feuchtigkeitshärtender Klebstoff, Dichtstoff oder Beschichtung, welcher insbesondere bei Raumtemperatur oder bei erhöhter Temperatur, bis beispielsweise 100°C applizierbar ist.

Ebenfalls betrifft die Erfindung eine gehärtete Zusammensetzung, welche erhältlich ist aus der Reaktion einer Zusammensetzung, wie sie vorhergehend beschrieben worden ist, mit Wasser, insbesondere in Form von Luftfeuchtigkeit.

Weiterhin betrifft die vorliegende Erfindung die Verwendung von Siliciumdioxid, welches an seiner Oberfläche funktionelle Gruppen aufweist, die gegenüber Isocyanatgruppen reaktiv sind, zur Verringerung des Anteils an Isocyanatgruppen aufweisenden Monomeren in Zusammensetzungen enthaltend mindestens ein Isocyanatgruppen aufweisendes Polyurethanpolymer sowie mindestens ein Isocyanatgruppen aufweisendes Monomer.

Dabei liegt das Siliciumdioxid in Form von Partikeln vor, welche eine durchschnittliche Partikelgrösse von ≤ 100 µm und eine spezifische Oberfläche von ≥ 100 m²/g aufweisen.

Bevorzugtes Siliciumdioxid, welches an seiner Oberfläche funktionelle Gruppen aufweist, die gegenüber Isocyanatgruppen reaktiv sind, ist bereits vorhergehend beschrieben worden.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Zugfestigkeit**, die **Bruchdehnung**, und der **Elastizitätsmodul** (E-Modul) bei 0 bis 5% Dehnung wurden nach DIN EN 53504 (Zuggeschwindigkeit: 200 mm/min) an während 7 Tagen bei 23°C und 50% relativer Luftfeuchtigkeit ausgehärteten Filmen mit einer Schichtdicke von 2 mm bestimmt.

Der **Schubmodul** (auch **G-Modul**) wurde bestimmt nach DIN 54451, wobei zwei Aluminium-Probekörper (70 x 25 x 5 mm), welche mit Sika^{®} Primer-204 N (erhältlich von Sika Schweiz AG) vorbehandelt wurden, auf einer Fläche von 10 x 25 mm mit einer Klebstoffschichtdicke von 1.75 mm verklebt und 7 Tage bei 23°C und 50% relativer Luftfeuchtigkeit ausgehärtet wurden. Anschliessend wurden die Probekörper mit einer Geschwindigkeit von 10 mm/min auseinander gezogen. Der Schubmodul wird bei 10% Gleitung gemessen.

Für die Bestimmung der **Auspresskraft** wurden die Klebstoffe in innenlackierte Aluminiumkartuschen gefüllt. Nach einer Konditionierung von 12 Stunden bei 23°C wurden die Kartuschen geöffnet und mittels Auspressgerät ausgepresst. Dafür wurde eine Düse mit 5 mm Innendurchmesser auf die Kartusche aufgeschraubt. Mit einem Auspressgerät (Zwick/Roell Z005) wurde die Kraft bestimmt, die benötigt wurde, um den Dichtstoff mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 45 mm Auspressweg wurde die Messung gestoppt.

Der **Monomergehalt** für MDI und TDI wurde folgendermassen bestimmt: Ca. 150 mg der Probe wurden in einem 10 ml Messkolben eingewogen und mit trockenem Acetonitril zur Marke gelöst. Nach der Derivatisierung mit 1 Vol.-% N-Propyl-4-nitrobenzylamin in Acetonitril (Volumenverhältnis 1:1) wurde die Probe 30 Minuten stehen gelassen und anschliessend durch eine Nylonmembran (Porengrösse 0,2 µm) filtriert. Die klare, farblose Lösung wurde mittels HPLC PDA-Detektor analysiert (HPLC-System: Varian ProStar LC-System; Detektor: Varian ProStar 330 Photodiodenarray; Säule: Kinetex 100 PFP, 2.6 µm 100x3 mm; Säulenofen: 30°C; Mobile Phase A: 0.04 M Natriumacetat (pH 4.5); Mobile Phase C: Acetonitril; HPLC-Methode: SOP-390C; Flussrate: 0.7 ml/min; Detektion Channel 1: UV 275 nm (2,6-, 2,4-TDI und c/t-IPDI); Detektion Channel 2: UV 250 nm (2,4'-MDI und 4,4'-MDI); Injektions Vol.: 10 µl).

### Herstellung des Isocvanatgruppen aufweisenden Polyurethanpolymers P1

1300 g Polyoxypropylendiol (Acclaim^{®} 4200 N, Bayer MaterialScience AG; OH-Zahl 28.5 mg KOH/g), 2600 g Polyoxypropylenpolyoxyethylentriol (Caradol^{®} MD34-02, Shell Chemicals Ltd., UK; OH-Zahl 35.0 mg KOH/g), 600 g 4,4'-Methylendiphenyldiisocyanat (4,4'-MDI; Desmodur^{®} 44 MC L, Bayer MaterialScience AG) und 500 g Diisodecylphthalat (DIDP; Palatinol^{®} Z, BASF SE, Deutschland) wurden nach bekanntem Verfahren bei 80°C zu einem NCOterminierten Polyurethanpolymer mit einem Gehalt an freien Isocyanatgruppen von 2.05 Gew.-% umgesetzt.

Das hergestellte Isocyanatgruppen aufweisende Polyurethanpolymer ***P1*** weist ein Monomergehalt MDI von 2.38 Gew.-% auf.

Die Verringerung des Anteils an Isocyanatgruppen aufweisenden Monomeren wurde bestimmt durch Messung des Monomergehalts in ***P1*** und anschliessender Zusammenführung von ***P1*** mit QuadraSil™ AP, einem Siliciumdioxid, welches an seiner Oberfläche Aminogruppen aufweist. Dabei wurden 2 g ***P1*** in einem 30 ml Polypropylen-Behälter vorgelegt und mit Stickstoff geflutet. Anschliessend wurden 0.15 g QuadraSil™ AP zugegeben und der Behälter wurde verschlossen. Die Proben wurden bei 23°C in einem SpeedMixer™ von Hauschild Engineering, Deutschland, während 30 Sekunden bei 330 Umdrehungen pro Minute gemischt, danach während einer Stunde stehen gelassen. Der Mischvorgang wurde zweimal wiederholt. Anschliessend folgte eine erneute Messung des Monomergehalts, wobei nun ein Monomergehalt von 0.20 Gew.-% gemessen wurde. Dies entspricht einer Monomerreduktion von etwa 92% (Durchschnitt aus drei Messungen).

### Herstellung der Klebstoffe

Die Klebstoffe wurden folgendermassen hergestellt, wobei die jeweiligen Anteile der einzelnen Bestandteile in Tabelle 1 in Gewichtsteilen angegebenen sind: Das Isocyanatgruppen aufweisende Polyurethanpolymer ***P1*** wurde in einem Vakuummischer vorgelegt. Bei Raumtemperatur wurde das QuadraSil™ AP bzw. das QuadraSil™ AP (denat.) zugegeben und während 30 Minuten gerührt. Das Gemisch wurde dann auf 60°C erwärmt und das DIDP wurde zugegeben. Anschliessend wurden Russ und Kreide zugegeben und weiterhin bei 60°C gerührt, danach abgekühlt auf 50°C. Zuletzt wurde der Katalysator zugefügt und das Gemisch wurde während weiteren 10 Minuten bei 50°C zu einer homogenen Paste verarbeitet, dann auf Raumtemperatur abgekühlt und mit Stickstoff geflutet. Die hergestellten Klebstoffe wurden dann in innenlackierte Aluminium-Spreizkolbenkartuschen abgefüllt.

Beispiel 1 enthält kein QuadraSil™ AP. In Beispiel 4 wurde das QuadraSil™ AP zusammen mit dem Weichmacher zugegeben, d.h. ohne separates Rühren, und nur während 5 Minuten eingerührt. In Beispiel 5 wurde das QuadraSil™ AP unmittelbar nach dem Katalysator zugegeben. Beispiele 1 und 8 sind Referenzbeispiele.

**Tabelle 1 Klebstoffzusammensetzungen in Gewichtsteilen und Resultate;**

| | ***1*** | ***2*** | ***3*** | ***4*** | ***5*** | ***6*** | ***7*** | ***8*** |
|---|---|---|---|---|---|---|---|---|
| ***P1*** | 39.82 | 39.4 | 39.2 | 39.22 | 39.22 | 38.65 | 37.9 | 38.65 |
| QuadraSil™ AP | - | 0.75 | 1.5 | 1.5 | 1.5 | 2.94 | 4.81 | - |
| QuadraSil™ AP (denat.) ^{a)} | - | - | - | - | - | - | - | 2.94 |
| DIDP ^{b)} | 22.64 | 22.4 | 22.3 | 22.3 | 22.3 | 21.97 | 21.55 | 21.97 |
| Russ | 17.89 | 17.7 | 17.62 | 17.62 | 17.62 | 17.36 | 17.03 | 17.36 |
| Kreide | 16.65 | 18.45 | 18.37 | 18.37 | 18.37 | 18.1 | 17.75 | 18.1 |
| p-Toluolsulfonyl-isocyanat | - | 0.3 | - | - | - | - | - | - |
| Katalysator ^{c)} | 1.01 | 1 | 1 | 1 | 1 | 0.98 | 0.96 | 0.98 |
| Gehalt MDI [Gew.-%] | 0.94 | 0.76 | 0.42 | 0.44 | 0.42 | 0.08 | 0 ^{d)} | 0.55 |
| MDI-Reduktion [%] | - | 19.1 | 55.3 | 54.2 | 55.3 | 91.5 | 100 ^{d)} | 41.5 |
| G-Modul (10%) [MPa] | 1.51 | 1.26 | 1.19 | 1.17 | 1.25 | 1.16 | 1.01 | 1.33 |
| E-Modul (0.5-5%) [MPa] | 4.26 | 3.37 | 3.55 | 3.69 | 3.61 | 3.44 | 2.95 | 4.14 |
| Bruchdehnung [%] | 537 | 594 | 487 | 521 | 516 | 436 | 4.29 | 474 |
| Zugfestigkeit [MPa] | 8.88 | 7.81 | 7.03 | 7.78 | 7.52 | 6.46 | 5.87 | 7.25 |
| Auspresskraft [N] | 482 | 525 | 541 | 615 | 564 | 704 | 1440 | 551 |

| | | | | | | | | |
|---|---|---|---|---|---|---|---|---|
| ^{a)} Thermisch denaturiertes QuadraSil™ AP (Bedingungen: ^{b)} 4 Stunden bei 700°C); ^{b)} Diisodecylphthalat; ^{c)} Dibutylzinndilaurat; ^{d)} MDI-Gehalt liegt unterhalb der Nachweisgrenze, d.h. ≤ 0.01 Gew.-%. | | | | | | | | |

## Patentansprüche

1. Zusammensetzung umfassend
- mindestens ein Isocyanatgruppen aufweisendes Polyurethanpolymer;
- mindestens ein Isocyanatgruppen aufweisendes Monomer;
sowie
- mindestens ein Siliciumdioxid, welches an seiner Oberfläche funktionelle Gruppen aufweist, die gegenüber Isocyanatgruppen reaktiv sind,
wobei das Siliciumdioxid in Form von Partikeln vorliegt, welche eine durchschnittliche Partikelgrösse von ≤ 100 µm und eine spezifische Oberfläche von ≥ 100 m²/g aufweisen; und
wobei die funktionellen Gruppen des Siliciumdioxids zumindest teilweise mit Isocyanatgruppen des Isocyanatgruppen aufweisenden Monomers umgesetzt sind.

2. Zusammensetzung gemäss Anspruch 1, **dadurch gekennzeichnet, dass** das Siliciumdioxid an seiner Oberfläche mit funktionellen Gruppen, welche gegenüber Isocyanatgruppen reaktiv sind, funktionalisiert ist.

3. Zusammensetzung gemäss einem der Ansprüche 1 oder 2, **dadurch gekennzeichnet, dass** das Siliciumdioxid in Form von Partikeln vorliegt, welche eine durchschnittliche Partikelgrösse von ≥ 1 µm aufweisen.

4. Zusammensetzung gemäss einem der vorhergehenden Ansprüche,
**dadurch gekennzeichnet, dass** das Siliciumdioxid in Form von Partikeln vorliegt, welche eine durchschnittliche Partikelgrösse im Bereich von 50 bis 60 µm aufweisen.

5. Zusammensetzung gemäss einem der vorhergehenden Ansprüche,
**dadurch gekennzeichnet, dass** das Siliciumdioxid in Form von Partikeln vorliegt, welche eine spezifische Oberfläche im Bereich von ≥ 300 m²/g aufweisen.

6. Zusammensetzung gemäss Anspruch 5, **dadurch gekennzeichnet, dass** die spezifische Oberfläche im Bereich von 400 bis 800 m²/g liegt.

7. Zusammensetzung gemäss einem der vorhergehenden Ansprüche,
**dadurch gekennzeichnet, dass** das Siliciumdioxid in Form von Partikeln vorliegt, welche porös sind, wobei die Poren eine Grösse im Bereich von 0.4 bis 50 nm aufweisen.

8. Zusammensetzung gemäss einem der vorhergehenden Ansprüche,
**dadurch gekennzeichnet, dass** die funktionellen Gruppen, welche gegenüber Isocyanatgruppen reaktiv sind, Aminogruppen sind.

9. Zusammensetzung gemäss einem der vorhergehenden Ansprüche,
**dadurch gekennzeichnet, dass** das Siliciumdioxid mit einem Organosilan funktionalisiert ist, dessen organischer Rest mindestens eine funktionelle Gruppe aufweist, welche gegenüber Isocyanatgruppen reaktiv ist.

10. Zusammensetzung gemäss einem der vorhergehenden Ansprüche,
**dadurch gekennzeichnet, dass** der Anteil des Siliciumdioxids 0.01 bis 10 Gew.-%, bezogen auf die gesamte Zusammensetzung, beträgt.

11. Zusammensetzung gemäss einem der vorhergehenden Ansprüche,
**dadurch gekennzeichnet, dass** die Zusammensetzung einen Gehalt an Isocyanatgruppen aufweisenden Monomeren von ≤ 1.5 Gew.-%, bezogen auf die gesamte Zusammensetzung, aufweist.

12. Verwendung einer Zusammensetzung gemäss einem der Ansprüche 1 bis 11 als feuchtigkeitshärtender Klebstoff, Dichtstoff oder Beschichtung.

13. Verfahren zur Verringerung des Anteils an Isocyanatgruppen aufweisenden Monomeren in Zusammensetzung enthaltend mindestens ein Isocyanatgruppen aufweisendes Polyurethanpolymer sowie mindestens ein Isocyanatgruppen aufweisendes Monomer umfassend die Schritte
- Bereitstellen einer Zusammensetzung enthaltend mindestens ein Isocyanatgruppen aufweisendes Polyurethanpolymer sowie mindestens ein Isocyanatgruppen aufweisendes Monomer;
- Zusammenführen der Zusammensetzung mit einem Siliciumdioxid, welches an seiner Oberfläche funktionelle Gruppen aufweist, die gegenüber Isocyanatgruppen reaktiv sind,
wobei das Siliciumdioxid in Form von Partikeln vorliegt, welche eine durchschnittliche Partikelgrösse von ≤ 100 µm und eine spezifische Oberfläche von ≥ 100 m²/g aufweisen.

14. Verwendung von Siliciumdioxid, welches an seiner Oberfläche funktionelle Gruppen aufweist, die gegenüber Isocyanatgruppen reaktiv sind,
wobei das Siliciumdioxid in Form von Partikeln vorliegt, welche eine durchschnittliche Partikelgrösse von ≤ 100 µm und eine spezifische Oberfläche von ≥ 100 m²/g aufweisen;
zur Verringerung des Anteils an Isocyanatgruppen aufweisenden Monomeren in Zusammensetzungen enthaltend mindestens ein Isocyanatgruppen aufweisendes Polyurethanpolymer sowie mindestens ein Isocyanatgruppen aufweisendes Monomer.
